# EUROPÄISCHE PATENTSCHRIFT

(11) **EP 1 968 738 B1**
(45) Veröffentlichungstag und Bekanntmachung des Hinweises auf die Patenterteilung: **31.10.2012**
(21) Anmeldenummer: 06829277.0
(22) Anmeldetag: 05.12.2006
(51) Int. Cl.: B01J 12/00, B01J 19/00, B01J 19/24, B01D 53/22, C01B 3/38

(54) **OXIDATIONSREAKTOR UND OXIDATIONSVERFAHREN**
OXIDATION REACTOR AND OXIDATION PROCESS
REACTEUR D'OXYDATION ET PROCEDE D'OXYDATION

(30) Priorität: 14.12.2005 DE 102005060171
(43) Veröffentlichungstag der Anmeldung: 17.09.2008
(73) Patentinhaber: ThyssenKrupp Uhde GmbH, 44141 Dortmund (DE); Borsig Process Heat Exchanger GmbH, 13507 Berlin (DE)
(72) Erfinder: WERTH, Steffen, 42653 Solingen (DE); LANGANKE, Bernd, 59439 Holzwickede (DE); KLEINSCHMIDT, Ralph, 45468 Mülheim an der Ruhr (DE); HOTING, Björn, 13465 Berlin (DE)
(86) Internationale Anmeldenummer: PCT/EP2006/011629
(87) Internationale Veröffentlichungsnummer: WO 2007/068369

(56) Entgegenhaltungen:
- EP-A1- 0 962 422
- FR-A1- 2 859 115
- US-A- 5 573 737
- US-A1- 2001 003 232
- US-A1- 2003 218 991

## Beschreibung

Die Erfindung richtet sich auf einen Oxidationsreaktor und ein Verfahren zum Einsatz dieses Reaktors, in welchem eine Vielzahl von gasdichten sauerstoffleitenden Membranelementen angeordnet sind, deren äußere Oberflächen auf der Seite eines mit Katalysator befüllbaren Reaktionsraumes angeordnet sind, und die mit einem sauerstoffhaltigen Gas durchströmbaren Membranelemente die räumliche Verbindung von Verteilerraum und einem Sammelraum und/oder einem Auslass des Reaktors darstellen. Der Reaktor ist dadurch gekennzeichnet, dass mittels eines oder mehrerer Distanzelemente ein definierter Mindestabstand zwischen der äußeren Oberfläche eines Membranelements und dem Katalysator des Reaktionsraumes sichergestellt ist.

Synthesegas, d. h. Gasgemische mit den Hauptbestandteilen CO und H₂ (sowie ggf. je nach Herstellung und Reinigungsschritten weiteren Komponenten wie z. B. CO₂, H₂, N₂ und inerte Bestandteile), wird dem heutigen Stand der Technik zu Folge hauptsächlich auf zwei Wegen hergestellt: dem endothermen Steamreforming von Kohlenwasserstoffen (z. B. Methan) oder abgeleiteten Verbindungen gemäß

H₂O+ CH₄ ⇄ CO + 3 H₂ Δ_{R}H⁰₂₉₈ = 206 kJ/mol (1),

sowie der direkten Umsetzung dieser Verbindungen mit Sauerstoff in einer-zumindest formal - partiellen Oxidation gemäß

CH₄ + ½ O₂ → CO + 2 H₂ Δ_{R}H⁰₂₉₈ = -36 kJ/mol (2).

Der für die partielle Oxidation benötigte Sauerstoff kann dabei beispielsweise aus einer kryogenen Luftzerlegungsanlage stammen.

Beim dem im Stand der Technik üblichen Steamreforming zur Synthesegasherstellung sind insbesondere die hohen Investitionskosten sowie die im Betrieb freiwerdende große Abhitzemenge nachteilig. Im Falle der partiellen Oxidation gemäß (2) ist hingegen u. a. die Notwendigkeit zum Einsatz von teurem Sauerstoff als nachteilig zu bewerten, welcher mittels einer separaten Luftzerlegungsanlage bereitgestellt wird. Da im allgemeinen Stickstoff im späteren Synthesegas unerwünscht ist, kann keine direkte Zugabe von Luft als Oxidationsmedium erfolgen.

Es wäre wirtschaftlich sehr vorteilhaft, wenn man den erforderlichen Sauerstoff bei der Herstellung von Synthesegas ohne zusätzlichen Verfahrensschritt direkt mittels einer gemischtleitenden Membran in einen Oxidationsreaktor einbringen könnten und hierzu sogar Luft als O₂-Lieferant nutzen könnte.

Hierzu sind im Labormaßstab Verfahren bekannt, welche zur Herstellung von Synthesegas Reaktoren mit so genannten gemischtleitenden Membranen einsetzen. Diese noch im Entwicklungsstadium befindlichen gemischtleitenden Materialien zur Bereitstellung des Sauerstoffes sind Verbindungen, welche unter geeigneten Betriebsbedingungen die Fähigkeit zur Leitung von Elektronen und zur Leitung von Sauerstoffionen jeweils in einem signifikanten Maße zeigen. Von untergeordneter Bedeutung sind weiterhin ausschließlich sauerstoffionenleitende Materialien ohne die Fähigkeit zur Elektronenleitung, bei welchen der notwendige Ladungsausgleich über einen zusätzlichen externen Stromkreis gewährleistet werden muss,

Werden derartige gemischtleitende Materialien zu gasdichten oder nahezu gasdichten Membranen verarbeitet und auf Betriebstemperatur erwärmt, so ergibt sich bei Vorliegen eines Sauerstoffpartialdruckgradienten zwischen den beiden Seiten der Membran unter Nutzung von Gitterfehlstellen ein Sauerstofffluss durch die Membran entsprechend dem vorliegenden Partialdruckgradienten

Feedseite O₂ + 4 e⁻ → 2 O²⁻ (3)

Permeatseite 2 O²⁻ → O₂ + 4 e⁻ (4)

Für jedes auf der Permeatseite in den Reaktionsraum abgegebene O₂-Molekül wird die Ladung von 4 e- frei, welche entgegen der Richtung des Sauerstoffflusses zur Feedseite transportiert wird.

Der Transport des Sauerstoffes erfolgt dabei in ionischer Form, d. h. es ergibt sich eine theoretische Selektivität einer dichten Membran bezüglich Sauerstoff von unendlich. Im Falle einer defektfreien Membran wird somit beispielsweise bei Einsatz von Luft als sauerstofflieferndes Medium eine Abtrennung des Sauerstoffes von den restlichen Luftbestandteilen wie Stickstoff ermöglicht.

Wie vorstehend genannt, ist es im Stand der Technik bekannt, Oxidationsreaktionen unter Nutzung sauerstoffleitender Materialien durchzuführen, wobei ein Reaktor eingesetzt wird, welcher durch eine gemischtleitende Membran in zwei Räume oder Bereiche unterteilt ist. Im Betrieb wird auf einer Seite der Membran oder des Membranmoduls ein sauerstofflieferndes Gas oder Gasgemisch vorgelegt, während auf der gegenüberliegenden Seite der Membran, welche im Folgenden als äußere Oberfläche bzw. Permeatseite bezeichnet wird, ein zu oxidierendes Medium vorgelegt wird. Ein derartiger Membranreaktor wird beispielsweise in US 5,820,655 A beschrieben. Sauerstoffliefernde Gase sind dabei häufig Wasserdampf, CO₂ oder bevorzugt Luft. Im Betrieb permeiert Sauerstoff von der Seite des höheren Sauerstoffpartialdruckes kommend durch die Membran und reagiert mit dem auf der gegenüberliegenden Seite befindlichen oxidierbaren Medium. Im Falle der Herstellung von Synthesegas ist das oxidierbare Medium bevorzugt ein Kohlenwasserstoff wie etwa Methan oder Erdgas mit einem hohen Methananteil, welchem zur Verhinderung einer möglichen Verkokung typischerweise Wasserdampf zugesetzt wird.

Da der Sauerstoff auf der Permeatseite ständig abreagiert, liegt der Sauerstoffpartialdruck der Permeatseite unter dem Sauerstoffpartialdruck der Feedseite, so dass weiter Sauerstoff permeiert. Daher kann beispielsweise auf der Feedseite Luft mit einem mehr oder weniger beliebigen Druck eingesetzt werden, während gleichzeitig auf der Permeatseite ein deutlich erhöhter Druck herrscht. Als untere Grenze für den Druck auf der Feedseite gilt, dass der Sauerstoffpartialdruck der Feedseite über dem Sauerstoffpartialdruck der Permeatseite liegen muss.

Um beispielsweise bei der Herstellung von Synthesegas akzeptable Reaktionsgeschwindigkeiten und damit auch integrale Selektivitäten auf der Permeatseite zu erreichen, wird typischerweise in dem Reaktionsraum des Reaktors ein geeigneter Katalysator eingesetzt. Beispiele dafür finden sich etwa in EP 0 999 180 A2, EP 1 035 072 A1,
US 6,077,323 oder US 6,695,983. Bei Betriebsbedingungen permeiert Sauerstoff von der Feedseite kommend durch die Membran und wird auf der gegenüberliegenden Permeatseite umgesetzt. Die treibende Kraft für diese Permeation ist die Sauerstoffpartialdruckdifferenz zwischen den beiden Seiten der Membran. Da diese durch die Abreaktion des Sauerstoffes ständig aufrechterhalten wird, kann im Fall der Synthesegaserzeugung mit Luft auf der Feedseite und einem Kohlenwasserstoff/Wasserdampf-Gemisch auf der Permeatseite die Luft mit Umgebungsdruck oder nur leicht erhöhtem Druck eingesetzt werden.

Bei den gemischtleitenden Materialien handelt es sich typischerweise um keramische Materialien, welche aufgrund einer Sauerstoffdefektstruktur bei geeigneten Betriebsbedingungen über die Fähigkeit zur Leitung von Sauerstoffionen verfügen. Geeignete Betriebsbedingungen sind dabei eine hinreichend hohe Temperatur von typischerweise über 600°C sowie eine Sauerstoffpartialdruckdifferenz über das keramische Material. Derartige Materialien können beispielsweise der Gruppe der Perowskit- (ABO₃) bzw. perowskitverwandten Strukturen, der Fluoritstrukturen (AO₂), der Aurivilliusstrukturen ([Bi₂O₂][Aₙ₋₁BₙOₓ]) oder der Brownmilleritstrukturen (A₂B₂O₅) entstammen. Ebenso denkbar sind Kompositmaterialien aus ionenleitenden und elektronenleitenden Materialien. Typische Beispiele für in der Literatur als sauerstoffleitende Materialien bzw. Materialklassen aufgeführte Systeme sind La₁₋ₓ(Ca,Sr,Ba)ₓCo_{1-y}Fe_{y}O_{3-δ}, Ba(Sr)Co₁₋ₓFeₓO_{3-δ}, Sr(Ba)Ti(Zr)_{1-x-y}. Co_{y}FeₓO_{3-δ}, La₁₋ₓSrₓGa_{1-y}Fe_{y}O_{3-δ}, La_{0,5}Sr_{0,5}MnO_{3-δ}, LaFe(Ni)O_{3-δ}, La_{0,9}Sr_{0,1}FeO_{3-δ} oder BaCoₓFe_{y}Zr_{1-x-y}O_{3-δ}. (A. Thursfield, I. S. Metcalfe, J. Mat. Sci., 2004, 14, 275-2485)

Ferner können beispielsweise mehrphasige Kompositmaterialien zum Einsatz kommen. Für einen technischen Einsatz nutzbare Materialien sind jene, welche eine möglichst hohe Sauerstoffpermeanz aufweisen. Typische Werte liegen hier in der Größenordnung von >0.1 Nm³/(m²h) Sauerstoff.

Problematisch ist jedoch die chemische und mechanische Stabilität der Membranen. So kann durch den Fachmann errechnet werden, dass der Gleichgewichtssauerstoffpartialdruck in einem Synthesegasstrom gängiger Zusammensetzung bei 900°C und 30 bar Gesamtdruck weniger als 10⁻¹⁶ bar beträgt.

Andererseits sind die als gemischtleitende Membranen eingesetzten Materialien im Allgemeinen oxidische Keramiken, welche unterhalb eines von den Bestandteilen der Membran abhängigen Sauerstöffpartialdruckes zur Reduktion und damit Zerstörung der Kristallstruktur neigen. Durch den Fachmann kann beispielsweise leicht errechnet werden, dass das häufig in derartigen Materialien vorkommende CoO bei einer Temperatur von 900°C und dem genannten Sauerstoffpartialdruck von unter 10⁻¹⁶ bar zu elementarem Co reduziert wird. Diese theoretische Abschätzung lässt sich auch experimentell untermauern, wie in dem Vergleichsbeispiel gezeigt wird.

Eine weitere Gefahr derart hoher Sauerstoffpartialdruckgradienten ergibt sich aus möglicherweise auftretenden chemisch induzierten Spannungen. In Abhängigkeit von der Höhe des jeweiligen Sauerstoffpartialdrucks auf den beiden Seiten der Membran bilden sich unterschiedliche Sauerstoffdefektstrukturen innerhalb des Kristallgitters der Membran aus. Dies führt zu unterschiedlichen Gitterkonstanten des Kristallgitters auf der Feed- und der Permeatseite der Membran. Die dadurch induzierte mechanische Belastung, welche auch als chemisch induzierte Spannung bezeichnet wird, führt unter Umständen zu einer Zerstörung der Membran.

### Vergleichsbeispiel 1

Proben des für gemischtleitende Membranen geeigneten Materials Ba(Co,Fe,Zr)O_{3-δ}. welches nachstehend mit BCFZ bezeichnet wird (Journal of Membrane Science, 2005, 258, 1-4) wurden bei 850°C und einem Druck von 1 bar einer Synthesegasatmosphäre der folgenden Zusammensetzung ausgesetzt:

| | |
|---|---|
| CO₂ | 7 Vol.-% |
| CO | 24 Vol.-% |
| H₂ | 56 Vol.-% |
| H₂O | 7 Vol.-% |
| CH₄ | 6 Vol.-% |

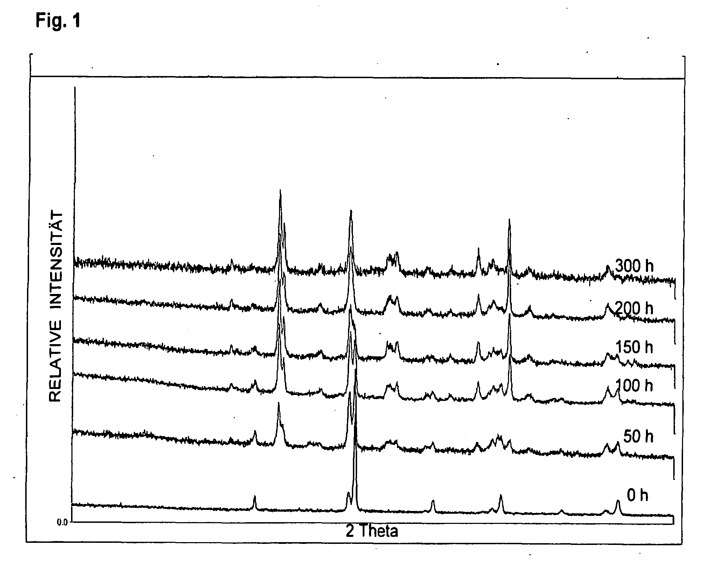

Anschließend wurde mittels X-Ray Diffraction (XRD) die Kristallstruktur der Proben in Abhängigkeit von der Verweildauer bestimmt. Fig. 1 zeigt die Resultate des Vergleichsbeispiels. In dieser Darstellung ist für die sechs gewählten Verweilzeiten der Membran, die Relative Intensität über Beugungswinkel (Theta) aufgetragen. Die gegenüber dem 0h-Verlauf aufgetretenen neuen Peaks der relativen Intensität bei längeren Laufzeiten, deuten u.a. auf die Bildung von elementarem Co sowie verschiedener eigenständiger Oxidphasen hin. Gleichzeitig verschwinden die Peaks der für die Sauerstoffpermeation entscheidenden Perowskitphase. Es ist offensichtlich, dass bereits bei Verweilzeiten von nur 50 h eine signifikante Degradation der Kristallstruktur auftritt, welche mit einem Verlust der bestimmungsgemäßen Funktionsfähigkeit der Membran verbunden ist, also zu einer lokalen Zersetzung führt.

Zusätzlich zu dieser Zerstörung der Membran ist bei Anwesenheit von Luft auf einer Seite der Membran eine Ausbildung von unterschiedlichen Gitterkonstanten auf beiden Seiten der Membran mit der Folge mechanischer Belastungen in Folge chemisch induzierten Spannungen zu beobachten (F. Boroomand, E. Wessel, H. Bausinger, K. Hilpert, Solid State Ionics, 2000, 129, 251-258; S. B. Adler, J. Am. Ceram. Soc., 2001, 84, 2117-2119)

Es ist folglich sowohl auf experimenteller als auch auf theoretischer Basis zu befürchten, dass eine keramische Membran mit der Zusammensetzung BCFZ bei der Nutzung zur Herstellung von Synthesegas zerstört wird, so dass trotz der grundsätzlich geeigneten Materialeigenschaft bisher keine industrielle Nutzung möglich erschien.

Weiterhin ist bei einer direkten Anlagerung von Katalysatormaterial an der Membran zu befürchten, dass bei der erforderlichen Temperatur von über 800°C chemische Feststoffreaktionen im Kontaktbereich der Oberflächen stattfinden, welche ebenfalls zur Schädigung oder lokalen Zerstörung der Membran führen können.

Eine Möglichkeit zur Umgehung dieser Zerstörung wird in EP 0,999,180 A2 offenbart. Bestandteil dieser Schrift ist die gezielte Zugabe von Oxygenaten wie CO₂ oder Wasserdampf zur Permeatseite der Membran. Hierdurch erhöht sich der Gleichgewichtssauerstoffpartialdruck auf der Permeatseite der Membran auf einen Wert, welcher oberhalb des zur Reduktion der Membran führenden Sauerstoffpartialdruckes liegt. Problematisch ist hierbei jedoch der erhöhte Aufwand hinsichtlich Investitions- und Betriebskosten aufgrund der notwendigen Gasrückführung innerhalb der Anlage sowie die begrenzte Variationsbreite des Gleichgewichtssauerstoffpartialdruckes. Bei den durch die Anhebung typischerweise erreichbaren Gleichgewichtssauerstoffpartialdrücken auf der Permeatseite von etwa 10⁻¹⁰ bar werden die üblichen Membranmaterialien zwar nicht mehr reduziert, chemisch induzierte Spannungen treten jedoch weiterhin auf. Diese Rückführung von Oxygenaten ist daher nicht generell dafür geeignet, neben der Reduktionsstabilität der keramischen Membran auch deren mechanische Stabilität zu verbessern und verschlechtert natürlich auch die Wirtschaftlichkeit eines solchen Verfahrens.

Eine weitere Möglichkeit, die reduktive Zerstörung der Membran zu vermeiden, beschreibt die US 2003/0218991 A1. Die Lehre offenbart einen Reaktor als Vorrichtung zur Durchführung einer chemischen Reaktion, bei der ein sauerstoffhaltiges Gas durch ein Rohr aus einer sauerstoffhaltigen Membran geführt wird, welche von einem katalytisch aktiven Material umgeben ist und dieses katalytisch aktive Material von einem weiteren inerten porösen Material umgeben ist, wodurch die Anordnung physikalisch stabil gehalten wird und die Membran vor der Zerstörung durch das reduzierende Reaktionsgas geschützt wird. Die Membran und das katalytisch aktive Material sind so beschaffen, dass sie unter den Reaktionsbedingungen nicht miteinander reagieren oder physikalisch, beispielsweise durch sogenannte "Spacer", voneinander getrennt sind. Das katalytisch aktive Material kann in beliebiger geometrischer Form vorliegen, wobei Scheiben, Rohre oder verschlossene Rohre als Beispiele genannt werden. Bespiele für mögliche Reaktionen sind die partielle Oxidation von Methan, Erdgas, oder leichten Kohlenwasserstoffen, mit oder ohne mitgeführtem Kohlendioxid, und die Zersetzung von Stickoxiden, Schwefeloxiden, Kohlendioxid und Schwefelwasserstoff durch Sauerstoff.

Die US 5573737 beschreibt ein hohles Reaktionsrohr als Reaktor für die partielle Oxidation von Kohlenwasserstoffen, welches aus mehreren Schichten aufgebaut ist, wobei das äußere Rohr aus einem sauerstoffpermeablen Perovskit besteht, das innere Rohr aus einem dotierten Zirkonoxid besteht, und das dazwischenliegende mittlere Rohr an der Übergangsschicht zum äußeren Rohr einen Überschuss an Perovskit aufweist und an der Übergangsschicht zum inneren Rohr einen Überschuss an Zirkondioxid aufweist, wobei das sauerstoffhaltige Gas in einem Reaktor an der äußeren Schicht des Reaktionsrohres vorbeigeleitet wird, und das reduzierende Reaktionsgas durch das hohle Rohr geleitet wird. Durch den Einbau des mittleren Zwischenrohres wird die Stabilität des inneren Rohres aus Perovskit gewährleistet. Das innere Rohr aus dem Perovskitmaterial übemimmt dabei die Funktion der Sauerstoffpermeation aus dem sauerstoffhaltigen Gas in das Reaktionsgas.

Aus dem Stand der Technik ergibt sich somit die Aufgabe, einen Oxidationsreaktor mit einer sauerstoffleitenden Membran zu entwickeln, wobei die Membran eine hohe Reduktionsstabilität und hohe mechanische Stabilität aufweist.

Die vorliegende Erfindung löst diese Aufgabe durch einen Oxidationsreaktor gemäß dem Anspruch 1, der eine Zuleitung für ein sauerstoffhaltiges Gas, welche in einen Verteilerraum oder ein \/erteilerelement führt, umfasst. Weiterhin umfasst der Oxidationsreaktor eine Zuleitung für ein ganz oder teilweise zu oxidierendes Rohgas, welche in einen Reaktionsraum führt, wobei in dem Reaktionsraum eine Vielzahl von gasdichten sauerstoffleitenden Membranelementen angeordnet sind. Die vorliegende Erfindung löst die Aufgabe weiterhin durch einen Reaktor, in dem die Membranelemente in Form eines Bündels oder einer Gruppe parallel miteinander verwobener oder verwundener Membranelemente verwendbar sind.

Die Membranelemente weisen bezogen auf den Sauerstofftransport eine Eintritts- und eine Austrittsfläche auf, wobei die Austrittsfläche als äußere Oberfläche definiert ist, die auf der Seite des Reaktionsraumes angeordnet ist. Die Membranelemente stellen die räumliche Verbindung von Verteilerraum und einem Sammelraum und/oder einem Auslass dar. Das sauerstoffhaltige Gas kann im Betrieb des Reaktors diesen in der Reihenfolge: Einlass, Verteilerraum, Membranelemente, Sammelraum und/oder Auslass durchströmen, wobei der Reaktionsraum mit Katalysator befüllbar ist.

Dabei wird mittels eines oder mehrerer Distanzelemente ein definierter Mindestabstand zwischen der äußeren Oberfläche eines Verbundes von Membranelementen zum einfüllbaren Katalysator sichergestellt. Der Verbund kann dabei ein Bündel oder Gruppe paralleler oder miteinander verwobener oder verwundener Membranelemente sein.

Vorteilhafterweise sind die Distanzelemente des erfindungsgemäßen Reaktors inerte Formkörper, welche die Membranelemente als Bündel oder Gruppe umhüllen oder zum Reaktionsraum hin vorgelagert sind. Die Formkörper können dabei als Schüttung vorliegen und/oder als Einzelelement, wie beispielsweise ein Mantelrohr, geformt sein. Das inerte Material weist dabei ein Porenvolumen oder eine Perforation auf, welche kleiner als der Feinkornanteil des einfüllbaren Katalysators ist.

Die Distanzelemente können in einer weiteren Ausführungsform aus ein oder mehreren inerten Materialien gebildet sein, welche direkt auf der äußeren Membranoberfläche anhaften. Distanzelemente einer derartigen Form würden durch eine geeignete Porenstruktur, welche kleiner als der Feinanteil der Katalysatorschüttung ist, den Katalysator vom direkten Kontakt mit den sauerstoffleitenden Membranelementen abhalten.

Eine vergleichbare Rückhaltung kann erreicht werden, wenn die Distanzelemente katalytisch wirksame Formkörper sind, welche in denjenigen Bereichen bei bestimmungsgemäßem Betrieb des Reaktors oxidiert und dadurch inertisiert werden, welche der Austrittsfläche der Membran gegenüberliegend und/oder berührend angeordnet sind.

Die Formgebung der Distanzelemente in dem erfindungsgemäßen Oxidationsreaktor ist dabei entweder regelmäßig oder weist eine unregelmäßige Struktur auf. Die Distanzelemente können weiterhin dadurch verbessert werden, dass diese eine oder mehrere katalytisch aktive Oberflächen aufweisen. Idealerweise sind die Distanzelemente derart geformt, dass die zum Reaktionsraum weisenden Oberflächen mit katalytisch aktivem Material beschichtet oder aus katalytisch aktivem Material gebildet sind.

In einer vorteilhaften Ausführungsform sind die Membranelemente der beiden vorgenannten Oxidationsreaktoren aus einem oder mehreren der Materialien gebildet, welche aus der Gruppe der Perowskite (ABO₃), perowskitverwandten Strukturen, Fluoritstrukturen (AO₂), Aurivilliusstrukturen ([Bi₂O₂][Aₙ₋₁BₙOₓ]) oder der Brownmilleritstrukturen (A₂B₂O₅) stammen. Besonders geeignet für den O₂-Transport und somit die Nutzung in dem erfindungsgemäßen Oxidationsreaktor sind Membranelemente, die aus einem oder mehreren der Materialien gebildet ist, welche durch folgende allgemeine Strukturformeln beschrieben werden können: La₁₋ₓ(Ca,Sr,Ba)ₓCo_{1-y}Fe_{y}O_{3-δ}, Ba(Sr)Co₁₋ₓFeₓO_{3-δ}, Sr(Ba)Ti(Zr)_{1-x-y}Co_{y}FeₓO_{3-δ}, BaCoₓFe_{y}Zr_{1-x-y}O_{3-δ}, La₁₋ₓSrₓGa_{1-y}Fe_{y}O_{3-δ}, La₂NiₓFe_{y}O_{4-δ}, La_{0,5}Sr_{0,5}MnO_{3-δ}, LaFe(Ni)O_{3-δ} oder La_{0,9}Sr_{0,1}FeO_{3-δ}.

Idealerweise weisen die Membranelemente dabei eine Sauerstoffpermeanz auf, die bei 950°C und einer Sauerstoffpartialdruckdifferenz von >0,1 bar zwischen den sich auf den beiden Seiten der Membranelemente befindlichen freien Gasphasen im Mittel gleich oder größer als 0,1 Nm³/(m²h) ist.

Von der Erfindung ist weiterhin ein Verfahren zur Oxidation von Stoffen umfasst, bei welchem ein Oxidationsreaktor nach einem der vorstehenden Ausführungsformen eingesetzt wird, dessen Reaktionsraum mit einem Katalysator gefüllt ist und
- Sauerstoff oder ein sauerstoffhaltiges Gas über den Einlass in den Verteilerraum des Oxidationsreaktors geleitet wird,
- in den Reaktionsraum ein zu oxidierendes Gas oder Gasgemisch geleitet wird,
- wobei die Temperatur im Reaktionsraum zwischen 200 - 1200°C, bevorzugt 500 - 1000°C und idealerweise 700 - 900°C beträgt und weiterhin
- der Druck zwischen 1 - 200 bar, bevorzugt 10 - 70 bar und idealerweise 30 bis 60 bar beträgt.

Eine vorteilhafte Ausführungsform des Oxidationsverfahrens sieht vor, dass das zu oxidierende Gas bevorzugt Methan oder Erdgas mit einem hohen Methananteil ist, welches auch nichtoxiderbare Bestandteile enthalten kann.

Weiterhin ist von der Erfindung auch die Verwendung des vorstehend genannten Oxidationsverfahrens in einer der Ausführungsformen für die Herstellung von Synthesegas mit den Hauptkomponenten H₂ und CO umfasst. Auch von der Erfindung umfasst ist der Einsatz des erfindungsgemäßen Oxidationsverfahrens für die oxidative Dehydrierung von Alkanen, die oxidative Methankupplung, die partielle Oxidation höherer Kohlenwasserstoffe und/oder Kohlenwasserstoffderivate oder die selektive Oxidation einzelner Bestandteile von Gasgemischen,

Anhand des nachstehenden Beispiels werden die Vorteile des erfindungsgemäßen Oxidationsreaktors und des Verfahrens belagt.

### Beispiel

Zur Herstellung von Synthesegas wurde aus dem an und für sich unter den zu erwartenden Bedingungen thermodynamisch instabilen Material BCFZ Hohlfasern mit folgenden Abmessungen hergestellt (Journal of Membrane Science, 2005, 258, 1-4):
- Länge 30 cm
- Außendurchmesser ca. 1,5 mm
- Wandstärke etwa 200 µm

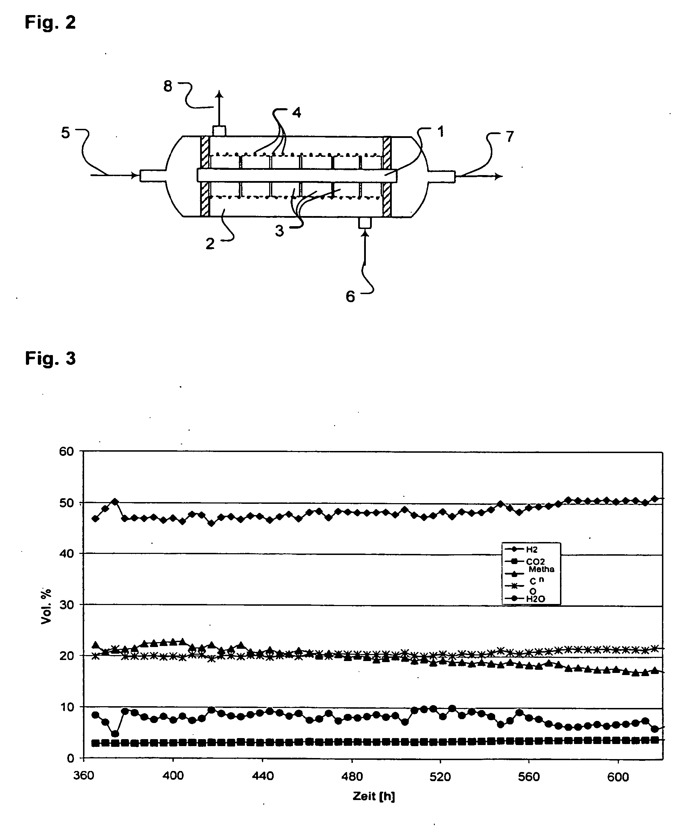

Ein nachstehend näher beschriebener und in Fig. 2 skizzierter Oxidationsreaktor, der die Erfindung nicht darstellt, kam zum Einsatz Eine als Hohlfaser geformte Membran 1, nachstehend auch Membranmodul genannt, aus dem vorgenannten Material wurde in einen Reaktionsraum 2 eingebaut, wobei die Membran 1 von etwa 1,5 cm langen Bruchstücken eines porösen Al₂O₃-Rohres 3 mit einem Durchmesser von 3 mm umgeben war. Auf der Außenseite dieser Al₂O₃-Rohres 3 wurde ein als gepunktete Fläche dargestellter Nickel-Katalysator 4 aufgebracht. Der Nickel-Katalysator 4 ist ein üblicher Oxidationskatalysator zum Steamreforming oder zur Oxidation von Methan. Im Betrieb wurde die Membran 1 auf der Hohlfaserinnenseite mit Luft 5 mit einem Druck von 1 bar durchströmt. während in den Reaktionsraum 2 außerhalb der Membran 1 mit Methan 6 unter einem Druck von 1 bar eingeleitet wurde. Der bezüglich Sauerstoff abgereicherte Ausgangsstrom 7 und der Produktstrom 8 werden abgeleitet. Die einzelnen Gasströme werden getrennt in den Oxidationsreaktor gegeben bzw. aus diesem entnommen, ohne dass eine Vermischung der Ströme erfolgt.

Der gesamte Reaktor wurde bei 850°C kontinuierlich über mehrere hundert Stunden betrieben. Während des Betriebes permeiert Sauerstoff von der Luftseite kommend durch die Membran und wurde auf der Permeatseite mit Methan zu Synthesegas umgesetzt. Ein beispielhaftes Diagramm für die Zusammensetzung des Produktgases zeigt Fig. 3. Es ist offensichtlich, dass die bei diesem Versuch gegebene Zusammensetzung der Synthesegasphase in etwa der Zusammensetzung des Vergleichsbeispiels entspricht.

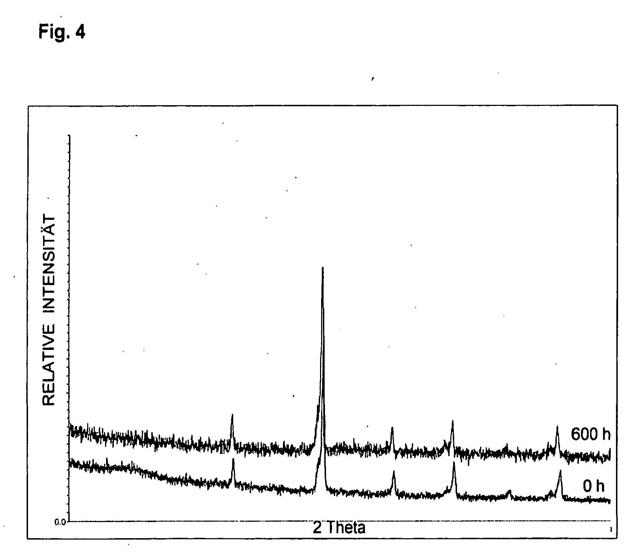

Nach Abschluss des Versuches wurde die Membran einer XRD-Analyse unterzogen, welche mit einer entsprechenden XRD-Analyse der fischen Membran verglichen wurde. Das in Fig. 4 gezeigte Resultat macht durch die Identität der Kurvenverläufe der frischen Membran und der Membran nach 600 Stunden Einsatz deutlich, dass entgegen den theoretischen Erwartungen und den in Fig. 1 dargestellten experimentellen Ergebnissen des Vergleichsbeispiels, auch über einen Zeitraum von mehreren hundert Stunden keine Veränderung der Kristallstruktur eintrat, d.h. die Membran war unter diesen Umständen im vorliegenden Reaktorsystem überraschender Weise stabil. Daneben ist in Fig. 3 mit zunehmender Nutzungsdauer sogar ein leichter Anstieg an H₂ und CO im Synthesegas zu beobachten.

Der Grund für diese unerwartete Stabilität könnte die Ausbildung einer Sauerstoff— Schutzschicht über der Membran im beschriebenen Reaktorsystem sein. Es wird vermutet, dass aufgrund des um die Membran angeordneten porösen Al₂O₃-Rohres, ein erhöhter Stofftransportwiderstand des Sauerstoffes von der permeatseitigen Membranoberfläche zum Katalysator aufgebaut wird. Es bildet sich somit ein lokales Maximum der Sauerstoffkonzentration direkt an der permeatseitigen Oberfläche der Membran, wodurch diese vor einer Zerstörung geschützt wird.

Durch die Variation von Dicke, Porenstruktur und Anordnung der Distanzelemente sowie der Strömungsbedingungen im Membranmodul und insbesondere im Reaktionsraum kann somit passend auf das jeweilige Membranmaterial ein geeigneter Reaktor entwickelt werden.

Durch den Einsatz von Distanzelementen zwischen äußerer Membranoberfläche und Katalysator kann somit das Ausmaß der Sauerstoff-Stofftransporthemmung auf der Permeatseite so eingestellt werden, dass eine lokale Sauerstoffschutzschicht der erwünschten Intensität über der Membranoberfläche gebildet wird. Entscheidend ist dabei der gezielte Abtransport des Sauerstoffes von der Permeatseite der Membran, damit die nachfolgende Umsetzung des Sauerstoffes am Katalysator gebremst wird. Dagegen nicht entscheidend ist der Stofftransport der reaktiven Medien, wie hier des Methans bzw. des Wasserstoffs, zur Membran hin, da der Schutz der Membran sich nicht durch eine geringe Konzentration der reaktiven Komponente an der permeatseitigen Oberfläche der Membran ergibt. Der Schutz ergibt sich vielmehr dadurch, dass ein hinreichend langsamer Abtransport des Sauerstoffes mit einer gleichzeitig hinreichend hohen Sauerstoffpermeation durch die Membran gekoppelt wird. In der Folge liegt an der permeatseitigen Membranoberfläche lokal eine signifikante Menge an freiem Sauerstoff vor.

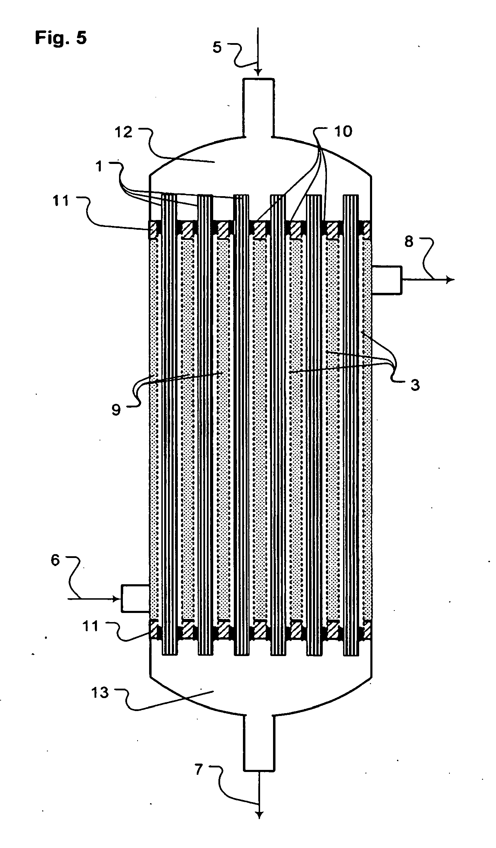

Fig. 5 zeigt In einer schematischen Schnittdarstellung beispielhaft einen konstruktiven Aufbau des erfindungsgemäßen Oxidationsreaktors für den industriellen Einsatz. Hierbei wird die Membran 1, die als Bündel von Membranhohlfasern geformt ist, durch ein gaspermeables Rohr 3 umfasst. Außerhalb der Rohre 3 ist eine Katalysatorschüttung 9 angeordnet, die durch die gepunktete Fläche angedeutet wird. Die Enden der einzelnen Membranhohlfasern sind im Rohr 3 durch Verbindungselemente 10 geführt und in diesen fixiert. Diese Verbindungselemente 10 dienen gleichzeitig zur
- Strömungsführung der Luft 5 oder eines anderen O₂-liefernden Mediums in die einzelnen durch Striche angedeuteten Membranmodule,
- Abströmung der an O₂ abgereicherten Luft 7 aus dem Bündel und
- gasdichten Barriere zwischen den Gasströmen 5 und 6.
Die die einzelnen Bündel der Membran 1 umhüllenden gaspermeablen Rohre 3 sind ihrerseits an beiden Enden in Rohrböden 11 fixiert. Die Bündel der Membranmodule 1 ragen mit der einen Öffnungsseite in den Verteilerraum 12 und mit der anderen in Sammelraum 13 des Oxidationsreaktors.

Diese Verbindungselemente 10 können beispielsweise gebohrte Stahlplatten sein, in welche die einzelnen Membranmodule eingeklebt werden. Das Bündel aus Membranfasem kann wie in Fig. 5 angedeutet als Vielzahl von parallelen Einzelfasern angeordnet sein oder auch in Form von miteinander verbundenen Faserbündeln gemäß DE 10 2005 005 464.1 vorliegen.

Im Betrieb durchströmt der sauerstoffliefernde Strom 5 die Fasern und gibt einen Teil oder seinen gesamten enthaltenen Sauerstoff durch die Membranelemente in den Faserzwischenraum ab. Anschließend verlässt der bezüglich Sauerstoff abgereicherte Reststrom 7 das Faserbündel. Die Katalysatorschüttung 9 wird von dem zu oxidierenden Strom 6 durchströmt, wobei dieser durch Umsetzung mit dem durch die Membran 1 permeierten Sauerstoff sowie ggf. weiteren Reaktionen zum Produktstrom 8 umgesetzt wird. Die Erfindung ist dabei nicht auf die vorstehend genannten konstruktiven Beispiele beschränkt.

Die beschriebenen Beispiele stellen keine Einschränkung der Erfindung dar, da dem Fachmann eine ganze Reihe von Möglichkeiten bekannt sind, gezielt einen Stofftransportwiderstand zwischen zwei Teilen eines Reaktors konstruktiv und/oder durch Wahl der Betriebsbedingungen zu erzeugen.

Der erfindungsgemäße Reaktor und das Verfahren sind weiterhin neben der Herstellung von Synthesegas mittels gemischtleitender Membranelemente auch auf weitere Oxidationsreaktionen anwendbar, bei welchen sauerstofftransportierende Membranelemente sinnvoll eingesetzt werden können. Beispiele für derartige Anwendungen sind die oxidative Dehydrierung von Alkanen, die oxidative Methankupplung, die partielle Oxidation höherer Kohlenwasserstoffe und/oder Kohlenwasserstoffderivate oder die selektive Oxidation einzelner Bestandteile von Gasgemischen.

Somit stehen dem Fachmann eine Vielzahl an bisher nicht für einsetzbar gehaltenen Membranmaterialien für industrielle Reaktoren und/oder Verfahren zur Verfügung, welche bisher aufgrund ihrer thermodynamischen und mechanischen Instabilität und sehr geringen Standzeiten nicht verwendet werden konnten.

## Patentansprüche

1. Oxidationsreaktor, umfassend
eine Zuleitung für ein sauerstoffhaltiges Gas (5), welche in einen Verteilerraum (12) oder ein Verteilerelement führt, eine Zuleitung für ein ganz oder teilweise zu oxidierendes Rohgas (6), welche in einen Reaktionsraum (2) führt, wobei in dem Reaktionsraum (2) eine Vielzahl von gasdichten sauerstoffleitenden Membranelementen (1) angeordnet sind, welche als äußere Oberflächen bezogen auf den Sauerstofftransport eine Eintritts- und eine Austrittsfläche aufweisen, wobei die Austrittsfläche auf der Seite des Reaktionsraumes (2) angeordnet ist, und diese Membranelemente (1) die räumliche Verbindung von Verteilerraum (12) und einem Sammelraum (13) und/oder einem Auslass (8) darstellen, welche von dem sauerstoffhaltigen Gas (5) durchströmbar sind,
**dadurch gekennzeichnet, dass**
der Reaktionsraum (2) eine Katalysator schüttung (9) enthält, und
mittels eines oder mehrerer Distanzelemente ein definierter Mindestabstand zwischen der äußeren Oberfläche der Membranelemente (1) und dem einfüllbaren Katalysator (9) sichergestellt ist und die Membranelemente (1) als Vielzahl in Form eines Verbundes angeordnet sind, wobei ein Verbund aus einem Bündel oder einer Gruppe paralleler oder miteinander verwobener oder verwundener Membranelemente (1) besteht, und durch die Distanzelemente ein definierter Mindestabstand zwischen den äußeren Oberflächen eines Bündels oder einer Gruppe der Membranelemente (1) des Verbundes und dem einfüllbaren Katalysator (9) sichergestellt ist.

2. Oxidationsreaktor nach Anspruch 1,
**dadurch gekennzeichnet, dass**
die Distanzelemente inerte Formkörper sind, welche die Membranelemente als Bündel oder Gruppe des Verbundes umhüllen und diesen zum Reaktionsraum (2) hin vorgelagert sind, wobei die Formkörper als Schüttung vorliegen oder als Einzelelement geformt sind.

3. Oxidationsreaktor nach einem der Ansprüche 1 oder 2,
**dadurch gekennzeichnet, dass**
die Distanzelemente inerte Formkörper sind, welche die Membranelemente (1) als Bündel oder Gruppe des Verbundes umhüllen und diesen zum Reaktionsraum (2) hin vorgelagert sind, wobei das oder die inerten Formkörper als Einzelelement und dieses Einzelelement als Mantelrohr geformt ist.

4. Oxidationsreaktor nach einem der Ansprüche 1 bis 3,
**dadurch gekennzeichnet, dass**
die Distanzelemente aus einem inerten Material gebildet sind, welches direkt auf der äußeren Membranoberfläche haftet.

5. Oxidationsreaktor nach einem der Ansprüche 2 bis 4,
**dadurch gekennzeichnet, dass**
das inerte Material ein Porenvolumen aufweist, welches kleiner als der Feinkornanteil des einfüllbaren Katalysators (9) einer Katalysatorschüttung ist.

6. Oxidationsreaktor nach einem der Ansprüche 1 bis 5,
**dadurch gekennzeichnet, dass**
die Distanzelemente eine regelmäßige oder unregelmäßige Struktur aufweisen.

7. Oxidationsreaktor nach Anspruch 1 bis 6,
**dadurch gekennzeichnet, dass**
die Membranelemente (1) aus einem oder mehreren der Materialien gebildet sind, welche aus der Gruppe der Perowskite (ABO₃), perowskitverwandten Strukturen, Fluoritstrukturen (AO₂), Aurivilliusstrukturen ([Bi₂O₂][Aₙ₋₁BₙOₓ]) oder der Brownmilleritstrukturen (A₂B₂O₅) stammen.

8. Oxidationsreaktor nach Anspruch 1 bis 7,
**dadurch gekennzeichnet, dass**
die Membranelemente (1) aus einem oder mehreren der Materialien gebildet sind, welche durch folgende allgemeine Strukturformeln beschrieben werden können: La₁₋ₓ(Ca,Sr,Ba)ₓCo_{1-y}Fe_{y}O_{3-δ}, Ba(Sr)Co₁₋ₓFeₓO_{3-δ}, Sr(Ba)Ti(Zr)_{1-x-y}Co_{y}FeₓO_{3-δ}. BaCoₓFe_{y}Z_{1-x-y}O_{3-δ}, La₁₋ₓSrₓGa_{1-y}Fe_{y}O_{3-δ}La_{0,5}Sr_{0,5}MnO_{3-δ}, La₂NiₓFe_{y}O_{4-δ}, LaFe(Ni)O_{3-δ} oder La_{0,9}Sr_{0,1}FeO_{3-δ}.

9. Oxidationsreaktor nach Anspruch 1 bis 8,
**dadurch gekennzeichnet, dass**
die Membranelemente (1) eine Sauerstoffpermeanz aufweisen, die bei 950°C und einer Sauerstoffpartialdruckdifferenz von >0,1 bar zwischen den sich auf den beiden Seiten der Membran (1) befindlichen freien Gasphasen, im Mittel gleich oder größer als 0,1 Nm³/(m²h) ist.

10. Verfahren zur Oxidation von Stoffen,
**dadurch gekennzeichnet, dass**
ein Reaktor nach einem der vorstehenden Ansprüche eingesetzt wird, dessen Reaktionsraum (2) mit einem Katalysator (9) gefüllt ist und
- Sauerstoff oder ein sauerstoffhaltiges Gas Ober den Einlass in den Verteilerraum des Oxidationsreaktors geleitet wird,
- in den Reaktionsraum ein zu oxidierendes Gas oder Gasgemisch geleitet wird,
- wobei die Temperatur im Reaktionsraum zwischen 200 - 1200°C, bevorzugt 500 - 1000°C und idealerweise 700 - 900 °C beträgt und der Druck zwischen 1 - 200 bar, bevorzugt 10 - 70 bar und idealerweise 30 bis 60 bar beträgt.

11. Verfahren zur Oxidation von Stoffen nach Anspruch 10,
**dadurch gekennzeichnet, dass**
das zu oxidierende Gas (6) auch nichtoxiderbare Bestandteile enthält und bevorzugt Methan oder Erdgas mit einem hohen Methananteil ist.

12. Verwendung des Verfahrens gemäß einem der Ansprüche 10 oder 11,
**dadurch gekennzeichnet, dass**
damit Synthesegas mit den Hauptkomponenten H₂ und CO hergestellt wird.

13. Verwendung des Verfahrens gemäß einem der Ansprüche 10 bis 12,
**dadurch gekennzeichnet, dass**
dieses für die oxidative Dehydrierung von Alkanen, die oxidative Methankupplung, die partielle Oxidation höherer Kohlenwasserstoffe und/oder Kohlenwasserstoffderivate oder die selektive Oxidation einzelner Bestandteile von Gasgemischen eingesetzt wird.

## Claims

1. Oxidation reactor encompassing
a feed line for an oxygenous gas (5), which communicates with a distribution chamber (12) or a distribution element, a feed line intended for a raw gas (6) to be partly or completely oxidised and communicating with a reaction chamber (2),
a multitude of gas-tight and oxygen-conductive membrane elements (1) being arranged in the reaction chamber (2), the external surfaces of said elements forming inlet and outlet surfaces - referred to the gas transport -, the outlet surfaces being provided on the side of the reaction chamber (2), and these membrane elements (1) constituting a connection between the distribution chamber (2) and a collecting chamber (13) and/or discharge section (6), the said parts allowing passage of the oxygenous gas (6),
**characterised in that**
the reaction chamber (2) contains a bulk catalyst material (9), and
one or several spacer elements establish a defined minimum distance between the external surface of the membrane elements (1) and the catalyst packing (9) and a multitude of the membrane elements (1) are arranged in the form of a block, the said block consisting of a bundle or a group of parallel or intertwisted or intertwined membrane elements (1), and the spacer elements establish a defined minimum distance between the external surfaces of a bundle or a group of the membrane elements (1) of the block and the catalyst packing (9).

2. Oxidation reactor according to Claim 1,
**characterised in that**
the spacer elements are inert components which enclose the membrane elements as bundle or group of the block and are arranged in the direction towards the reaction chamber (2), the said components being of bulk type or being formed as individual element.

3. Oxidation reactor according to any of the preceding Claims 1 or 2,
**characterised in that**
the spacer elements are inert components which enclose the membrane elements (1) as bundle or group of the block and are arranged in the direction towards the reaction chamber (2), the said inert component(s) being formed as individual element and said individual element as jacket pipe.

4. Oxidation reactor according to any of the preceding Claims 1 to 3,
**characterised in that**
the spacer elements consist of an inert material which is directly applied to the external surface of the membrane.

5. Oxidation reactor according to any of the preceding Claims 2 to 4,
**characterised in that**
the inert material has a pore volume that is smaller than the fines content of the catalyst packing (9) of a bulk catalyst material.

6. Oxidation reactor according to any of the preceding Claims 1 to 5,
**characterised in that**
the spacer elements are of a regular or irregular structure.

7. Oxidation reactor according to Claim 6,
**characterised in that**
the membrane elements (1) consist of one or several materials from the group of Perovskite (ABO₃), Perovskite-related structures, fluorite structures (AO₂), Aurivillius structures ([Bi₂O₂][Aₙ₋₁BₙOₓ]) or Brownmillerite structures (A₂B₂O₅).

8. Oxidation reactor according to Claims 1 to 7,
**characterised in that**
the membrane elements (1) consist of one or several materials which can be described by the general structural formulae listed below:
La₁₋ₓ(Ca,Sr,Ba),Co_{1-y}Fe_{y}O_{3-δ}, Ba(Sr)Co₁₋ₓFeₓO_{3-δ}, Sr(Ba)Ti (Zr)_{1-x-y}Co_{y}FeₓO_{3-δ}, BaCoₓFe_{y}Zr_{1-x-y}O_{3-δ}, La₁₋ₓSrₓGa_{1-y}Fe_{y}O_{3-δ} La_{0,5}Sr_{0,5}MnO_{3-δ}, La₂NiₓFe_{y}O_{4-δ}, LaFe(Ni)O_{3-δ} or La_{0,9}Sr_{0,1}FeO_{3-δ}.

9. Oxidation reactor according to Claims 1 to 8
**characterised in that**
the membrane elements (1) exhibit an oxygen permeability which has an average value of ≥ 0.1 Nm³(m²h) at 950°C and an oxygen partial pressure difference of >0.1 bar between free gas phases located on the two sides of the membrane (1).

10. Process for the oxidation of fluids,
**characterised in that**
a reactor is used according to one of the aforementioned claims, the reaction chamber (2) of which being filled with a catalyst (9) and
- oxygen or an oxygenous gas being fed into the distribution chamber of the oxidation reactor via the inlet,
- a gas or gas mixture to be oxidised being piped into the reaction chamber.
- with the temperature in the reaction chamber ranging from 200 to 1200°C, preferably from 500 to 1000°C and ideally from 700 to 900°C and the pressure ranging between 1 and 200 bars, preferably between 10 and 70 bars and ideally between 30 and 60 bars.

11. Process for the oxidation of fluids according to Claim 10,
**characterised in that**
the gas to be oxidised (6) also contains non-oxidisable constituents and is preferably methane or natural gas with a high content of methane.

12. Utilisation of the process according to any of the preceding Claims 10 or 11,
**characterised in that**
synthesis gas with the main components H₂ and CO is produced by this process.

13. Utilisation of the process according to any of the preceding Claims 10 to 12,
**characterised in that**
this process is used to perform oxidative dehydrogenation of alkanes, oxidative coupling of methane, partial oxidation of higher hydrocarbons and/or hydrocarbon derivatives or selective oxidation of individual constituents of gas mixtures

## Revendications

1. Réacteur d'oxydation, comprenant
une conduite d'arrivée pour un gaz oxygéné (5) conduisant à une chambre de distribution (12) ou à un élément de distribution, une conduite d'arrivée pour un gaz brut (6) à oxyder entièrement ou partiellement conduisant à un espace de réaction (2), sachant que
de nombreux éléments à membranes étanches au gaz et conducteurs d'oxygène (1) sont implantés dans l'espace de réaction (2) et dont les surfaces extérieures comprennent une surface d'entrée et une de sortie pour le transport de l'oxygène, sachant que la surface de sortie est implantée du côté de l'espace de réaction (2) et que ces éléments à membranes (1) représentent le raccord de la chambre de distribution (12) avec un espace collecteur (13) et/ou une sortie (8), ce raccord pouvant être traversé par le gaz oxygéné (5),
**caractérisé en ce que**
l'espace de réaction (2) comprend un garnissage de catalyseur (9) et qu'un espacement minimal défini est assuré entre la surface extérieure des éléments à membranes (1) et le catalyseur injectable (1) au moyen d'un ou de plusieurs éléments d'espacement et que les éléments à membranes (1) sont disposés à plusieurs en forme de réseau, sachant qu'un réseau se compose d'un paquet ou d'un groupe d'éléments à membranes (1) tissés ou enroulés parallèlement ou ensemble et qu'un espacement minimal défini est assuré par les éléments d'espacement entre les surfaces extérieures d'un paquet ou d'un groupe d'éléments à membranes (1) du réseau et le catalyseur injectable (9).

2. Réacteur d'oxydation selon la revendication 1,
**caractérisé en ce que**
les éléments d'espacement sont des corps moulés inertes enveloppant les éléments à membranes en paquet ou en groupe du réseau, placés en amont de ceux-ci avant l'espace de réaction (2) sachant que les corps moulés sont présents sous forme de garnissage ou sont formés en un élément unique.

3. Réacteur d'oxydation selon une des revendications 1 ou 2,
**caractérisé en ce que**
les éléments d'espacement sont des corps moulés inertes enveloppant les éléments à membranes (1) en paquet ou en groupe du réseau, placés en amont de ceux -ci avant l'espace de réaction (2) sachant que le ou les objet(s) moulé(s) inerte(s) est/sont formé(s) en un élément unique formé lui-même en tubage.

4. Réacteur d'oxydation selon une des revendications 1 à 3,
**caractérisé en ce que**
les éléments d'espacement sont composés à partir d'un matériau inerte, adhérant directement sur la surface extérieure de la membrane.

5. Réacteur d'oxydation selon une des revendications 1 à 4,
**caractérisé en ce que**
le matériau inerte comprend un volume poreux inférieur à la teneur en fines du catalyseur injectable (9) d'un garnissage de catalyseur.

6. Réacteur d'oxydation selon une des revendications 1 à 5
**caractérisé en ce que**
les éléments d'espacement présentent une structure régulière ou irrégulière.

7. Réacteur d'oxydation selon une des revendications 1 à 6,
**caractérisé en ce que**
les éléments à membranes (1) sont formés d'un ou plusieurs matériaux provenant du groupe des pérovskites (ABO₃), de structures apparentées aux pérovskites, des structures fluorines (AO₂), de structures de type aurivilius ([Bl₂O₂][[Aₙ₋₁BₙOₓ] ou de structures brownmillerite (A₂B₂O₅).

8. Réacteur d'oxydation selon une des revendications 1 à 7,
**caractérisé en ce que**
les éléments à membranes (1) sont formés d'un ou plusieurs matériaux pouvant être décrits par les formules de constitution générales suivantes :
La₁₋ₓ(Ca,Sr,Ba)ₓCo_{1-y}Fe_{y}C_{3-δ}, Ba(Sr)Co₁₋ₓFeₓO_{3-δ}, Sr(Ba)Ti(Zr)_{1-x-y}Co_{y}FeₓO_{3-δ}, BaCoₓFe_{y}Zr_{1-x-y}O_{3-δ}, La₁₋ₓSrₓGa_{1-y}Fe_{y}O_{3-δ}La_{0,5}Sr_{0,5}MnO_{3-δ}, La₂NiₓFe_{y}O_{4-δ}, LaFe(Ni)O_{3-δ} ou La_{0,9}Sr_{0,1}FeO_{3-δ}.

9. Réacteur d'oxydation selon une des revendications 1 à 8,
**caractérisé en ce que**
les éléments à membranes (1) présentent une perméance à l'oxygène en moyenne égale ou supérieure à 0,1 Nm³/(m²h) à 950°C et avec une différence de pression partielle de l'oxygène >0,1 bar entre les phases gazeuses libres présentes sur les deux côtés de la membrane (1).

10. Procédé d'oxydation de matières,
**caractérisé en ce que**
il est utilisé un réacteur selon une des revendications ci-dessus, dans l'espace de réaction (2) duquel est Injecté un catalyseur (9) et que
- l'oxygène ou un autre gaz oxygéné est dirigé dans la chambre de distribution du réacteur d'oxydation via l'entrée,
- un gaz ou mélange gazeux à oxyder est dirigé dans l'espace de réaction,
- sachant que la température dans l'espace de réaction est entre 200 et 1200°C, de préférence entre 500 et 1000 C et dans l'idéal entre 700 et 900°C et que la pression est entre 1 à 200 bars, de préférence entre 10 et 70 bars et dans l'idéal entre 30 et 60 bars.

11. Procédé d'oxydation de matières selon la revendication 10,
**caractérisé en ce que**
le gaz à oxyder (6) comprend également des composants non-oxydables et qu'il s'agit de préférence de méthane ou de gaz naturel présentant une forte teneur en méthane.

12. Utilisation du procédé selon une des revendications 10 ou 11,
**caractérisée en ce que**
pour qu'un gaz de synthèses soit obtenu avec les composants principaux H₂ et CO.

13. Utilisation du procédé selon une des revendications 10 à 12,
**caractérisée en ce que**
celui-ci est utilisé pour la déshydrogénation oxydative d'alcanes, la copulation oxydative du méthane, l'oxydation partielle d'hydrocarbures supérieurs et/ou de dérivés d'hydrocarbures ou l'oxydation sélective de certaines composants de mélanges gazeux.
